# FASCICULE DE BREVET EUROPEEN

(11) **EP 1 626 186 B1**
(45) Date de publication et mention de la délivrance du brevet: **30.05.2007**
(21) Numéro de dépôt: 04291971.2
(22) Date de dépôt: 02.08.2004
(51) Int. Cl.: F16B 21/08, F16B 21/04, B60R 13/00

(54) **Moyen de fixation pour fixer un panneau sur un élément de carrosserie ainsi que panneau comportant de tels moyens de fixation**
Verbindungsmittel, um eine Verkleidung auf ein Karosserieelement zu befestigen und Verkleidung, die ein solches Verbindungsmittel aufweist
Fixing means to fix a panel on to a body element and panel comprising such fixing means

(43) Date de publication de la demande: 15.02.2006
(73) Titulaire: Lisi Automotive Rapid, 95650 Puiseux Pontoise (FR)
(72) Inventeur: Dufresne, Aleandra Michel André, 95360 Montmagny (FR); Marcel, Gilles Jean Michel, 95620 Parmain (FR)
(74) Mandataire: Thinat, Michel

(56) Documents cités:
- EP-A- 0 735 283
- EP-A- 1 063 432
- DE-B- 1 107 029
- US-A- 4 599 768

## Description

L'invention concerne un moyen de fixation pour fixer un panneau sur un élément de carrosserie, ainsi qu'un panneau comportant de tels moyens de fixation.

Dans des véhicules automobiles, l'intérieur de la carrosserie, notamment l'intérieur des portières, est recouvert de panneaux d'habillage. De tels panneaux d'habillage peuvent également être fixés sur d'autres parties de la carrosserie d'un véhicule automobile. C'est pour cette raison que la présente invention concerne un moyen de fixation pour fixer tout type de panneau sur l'un quelconque des éléments de carrosserie d'un véhicule automobile, les panneaux d'habillage d'une portière de véhicule automobile n'étant qu'un exemple non limitatif.

Les panneaux recouvrant les éléments de carrosserie d'un véhicule automobile doivent être fixés sur la carrosserie de manière à pouvoir les enlever facilement et, le cas échéant, de les fixer à nouveau sur l'élément de carrosserie. En même temps, le montage et le démontage d'un tel panneau doivent pouvoir se faire rapidement et notamment sans outils particuliers.

Pour cette raison, les panneaux d'habillage sont habituellement fixés par des agrafes ou des clips, c'est-à-dire avec des moyens de fixation sans vissage.

Un tel moyen de fixation est décrit, par exemple, dans le document EP-A-0 735 283. Ce moyen de fixation comprend une agrafe pourvue d'un pied d'ancrage et un socle pourvu d'une encoche permettant d'insérer l'agrafe dans le socle par un mouvement transversal par rapport à l'axe longitudinal de l'agrafe. Lorsque une ou plusieurs de ces agrafes sont montées sur le panneau, elles se dressent sensiblement perpendiculairement par rapport à l'étendue du panneau. Grâce à cette disposition, le panneau peut être fixé en le présentant devant l'élément de carrosserie à habiller, notamment de manière que chacune des agrafes se trouve en face d'une ouverture pratiquée à cet effet dans l'élément de carrosserie. Ensuite, on appuie sur le panneau et chacune des agrafes pénètre dans ladite ouverture. Les agrafes sont ainsi fixées dans les ouvertures par encliquetage.

Lorsqu'il s'agit de démonter un tel panneau, on tire sur le panneau, notamment aux endroits où sont disposées les agrafes, pour en faire sortir les agrafes, contre la résistance opposée par les éléments d'encliquetage, le cas échéant en agissant avec un outil sur les moyens d'encliquetage.

Les moyens de fixation du type de ceux décrits dans le document EP-A-0 735 283 se sont avérés désavantageux dans le sens qu'ils ne se prêtent pas à être montés sur un panneau d'habillage à l'aide d'un robot.

Par ailleurs, il s'est avéré utile de concevoir les moyens de fixation de manière à leur donner une liberté de mouvement dans un plan parallèle à l'étendue du panneau sur lequel ils sont montés.

Toutefois, les moyens de fixation doivent se maintenir, avant la fixation du panneau, en une position nominale centrée sur le support technique du panneau sur lequel ils sont montés.

Le document EP-A-1063432 est considéré comme étant l'état de la technique le plus proche et décrit un dispositif de fixation conforme le préambule de la revendication 1.

Ainsi, le but de l'invention est de proposer un moyen de fixation permettant de fixer un panneau sur un élément de carrosserie, qui soit facile à monter sur le panneau avec des moyens de montage automatiques et qui puisse à la fois maintenir une position nominale centrée et accepter un déplacement prédéterminé maximal dans un plan parallèle à celui dans lequel s'étend le panneau.

Le but de l'invention est atteint avec un moyen de fixation pour fixer un panneau tel un panneau d'habillage, sur un élément de carrosserie d'un véhicule automobile, qui comprend un porte-agrafe et une agrafe avec un axe longitudinal. L'agrafe et le porte-agrafe sont conformés pour pouvoir être assemblés sur le panneau et l'agrafe est conformée en outre pour permettre la fixation du panneau par introduction et encliquetage de l'agrafe dans un évidement pratiqué dans l'élément de carrosserie.

Cette conception de l'invention permet la réalisation du moyen de fixation selon deux principes. Le premier principe est celui de la réalisation en deux éléments distincts destinés à être rapportés successivement sur le panneau, à savoir de fixer le porte-agrafe sur le panneau dans une première étape de préparation du panneau et de monter l'agrafe dans le porte-agrafe dans une seconde étape de préparation du panneau. Selon l'autre principe de réalisation, le porte-agrafe est intégré dans le panneau par moulage, que le panneau soit moulé en un seul bloc ou qu'il comporte un support technique moulé du panneau avec le porte-agrafe intégré, lequel support technique est ensuite revêtu d'un tissu synthétique.

En ce qui concerne l'agrafe, celle-ci comporte avantageusement un corps d'agrafe et une tête élastiquement déformable.

Selon différents modes de réalisation de l'invention et leurs variantes, considérées isolément ou selon toute combinaison techniquement possible, le moyen de fixation de l'invention peut avoir au moins l'une des caractéristiques supplémentaires suivantes:
- la tête de l'agrafe a une forme sensiblement conique et est formée par au moins deux éléments flexibles ayant chacun une première extrémité en commun avec le (ou les) autre(s) élément(s) flexible(s) et une seconde extrémité solidaire d'une coupelle délimitant la tête de l'agrafe du corps de l'agrafe, l'extrémité commune des éléments flexibles étant supportée par au moins un élément rigide également solidaire de la coupelle, les éléments flexibles s'étendant à partir de l'extrémité commune jusqu'à atteindre un premier diamètre de l'agrafe et ensuite, après un retrait formant un épaulement, avec un deuxième diamètre de l'agrafe, inférieur au premier diamètre, jusqu'à la coupelle ;
- les éléments flexibles s'étendent à partir de l'extrémité commune jusqu'à atteindre un premier diamètre de l'agrafe et s'étendent ensuite, sensiblement parallèlement à l'axe longitudinal de l'agrafe, sur une première longueur axiale de l'agrafe et puis, après un retrait formant un épaulement, avec un deuxième diamètre de l'agrafe, inférieur au premier diamètre, sur une seconde longueur axiale de l'agrafe jusqu'à la coupelle ;
- le corps de l'agrafe comporte un élément cylindrique autour de l'axe longitudinal de l'agrafe avec deux extrémités opposées dont l'une est solidaire de la coupelle supportant la tête de l'agrafe et dont l'autre est solidaire d'éléments de fixation de l'agrafe sur le porte-agrafe, le corps de l'agrafe comprenant en outre, solidaires de l'élément cylindrique, des moyens de centrage de l'agrafe dans l'évidement de l'élément de carrosserie et sur le côté des moyens de centrage qui est orienté vers la coupelle, des moyens empêchant un mouvement axial de l'agrafe lors de son centrage ;
- les éléments permettant de fixer l'agrafe sur le porte-agrafe comprennent un premier et un second verrous à baïonnette, disposés transversalement par rapport à l'axe longitudinal de l'agrafe et axialement espacés l'un de l'autre de manière à pouvoir recevoir entre eux le panneau, l'étendue transversale du second verrou, plus proche de la tête de l'agrafe que le premier verrou, étant supérieure à celle du premier verrou, de manière à ne permettre, lors de l'introduction de l'agrafe dans le porte-agrafe, qu'au premier verrou de traverser un évidement formé à cet effet dans le porte-agrafe selon la forme et les dimensions du premier verrou, la fixation de l'agrafe sur le porte-agrafe étant obtenue, après introduction de l'agrafe dans le porte-agrafe, par une rotation de l'agrafe, autour de son axe longitudinal, d'une fraction d'un tour ;
- le moyen de fixation comprend quatre plots ayant une face supérieure en pente, les plots étant destinés à coopérer avec le second verrou à baïonnette pour obtenir une fixation de l'agrafe sur le porte-agrafe par un quart de tour de rotation de l'agrafe par rapport au porte-agrafe ;
- les moyens permettant le centrage de l'agrafe dans l'évidement de l'élément de carrosserie comprennent deux lamelles flexibles disposées diamétralement opposées et transversalement par rapport à l'axe longitudinal de l'agrafe, chacune des lamelles portant un patin destiné à prendre appui sur un rebord en saillie sur le porte-agrafe ;
- les moyens empêchant un mouvement axial de l'agrafe lors de son centrage comportent deux languettes de limitation s'étendant parallèlement aux lamelles flexibles des moyens de centrage ;
- les moyens empêchant un mouvement axial de l'agrafe lors de son centrage comportent un disque de limitation ;
- les éléments permettant de fixer l'agrafe sur le porte-agrafe comprennent des éléments d'encliquetage destinés à coopérer avec une ouverture pratiquée à cet effet dans le porte-agrafe ;
- les éléments permettant de fixer l'agrafe sur le porte-agrafe comprennent une traverse formant avec l'élément cylindrique une extrémité en T, et au moins deux griffes s'étendant à partir de la traverse, et avec une distance croissante de l'élément cylindrique, en direction des moyens de centrage ;
- les éléments de fixation de l'agrafe sur le porte-agrafe comprennent deux paires de griffes, une première paire étant disposée aux extrémités de la traverse et la seconde paire étant disposée entre la première paire de griffes et l'élément cylindrique.

Le but de l'invention est également atteint avec un panneau, par exemple un panneau d'habillage pour garnir l'intérieur de la carrosserie d'un véhicule automobile, le panneau étant pourvu de moyens de fixation ayant l'une ou plusieurs des caractéristiques énoncées ci-avant.

Avantageusement, les moyens de fixation comprennent des porte-agrafe intégrés dans le panneau par moulage.

D'autres caractéristiques et avantages de la présente invention ressortiront de la description ci-après de deux modes de réalisation de l'invention. La description est faite en référence aux dessins dans lesquels :
- les figures 1 à 5 montrent un moyen de fixation selon un premier mode de réalisation de l'invention avec, entre autres, trois étapes successives de l'assemblage du moyen de fixation ;
- les figures 6 à 8 montrent un moyen de fixation selon un second mode de réalisation de l'invention.

Les deux moyens de fixation décrits ci-après correspondent à deux modes de réalisation de l'invention ayant en commun que l'agrafe comporte un corps d'agrafe et une tête élastiquement déformable. De plus, les têtes d'agrafe de ces deux moyens de fixation sont de la même conception.

Toutefois, les deux moyens de fixation diffèrent l'un de l'autre en ce qui concerne les éléments de fixation de l'agrafe sur le porte-agrafe, cette différence entraînant deux versions différentes du porte-agrafe.

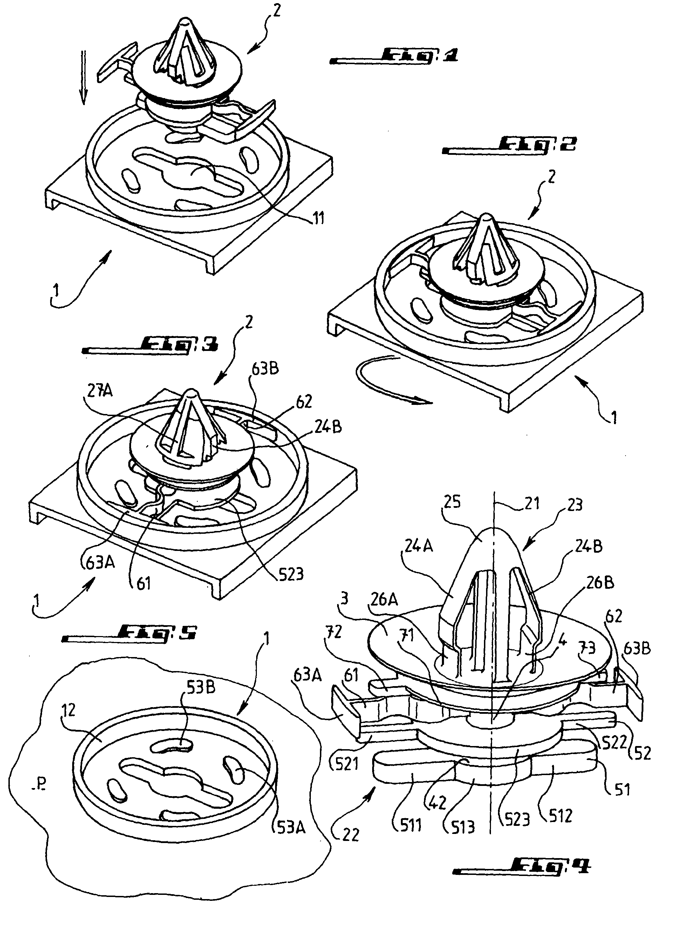

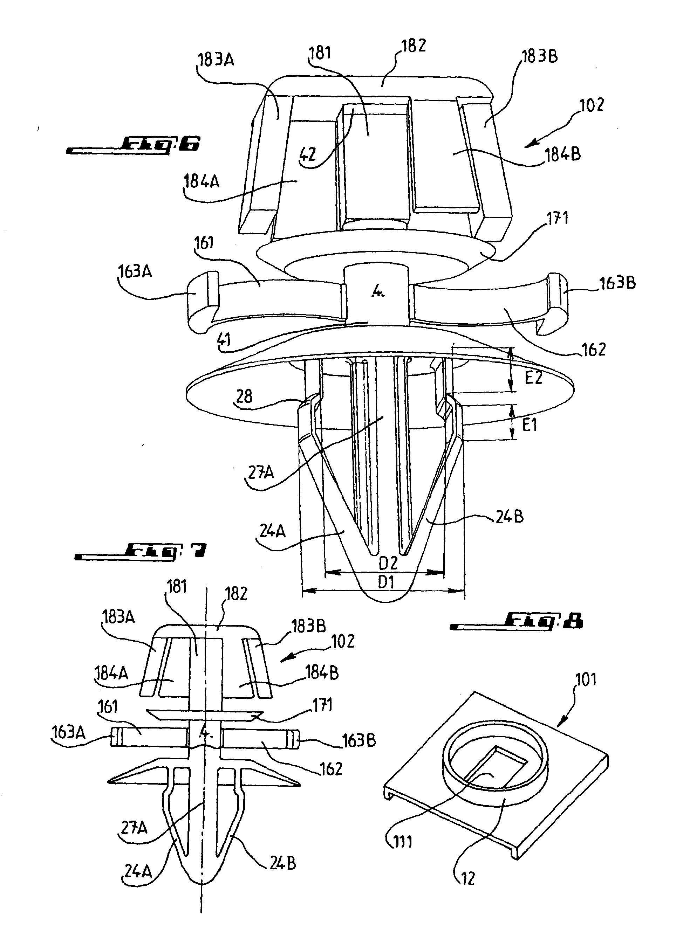

Le moyen de fixation représenté sur les figures 1 à 5, qui correspond donc à un premier mode de réalisation de l'invention, comprend un porte-agrafe 1 et une agrafe 2 avec un axe longitudinal 21. L'agrafe 2 et le porte-agrafe 1 sont conformés de manière à pouvoir être assemblés l'un avec l'autre sur un panneau P. A cet effet, le porte-agrafe 1 est pourvu d'une ouverture 11 dans laquelle l'agrafe 2 est introduite partiellement. Ensuite l'agrafe est tournée autour de son axe longitudinal 21 d'une fraction d'un tour, par exemple d'un quart de tour, et est ainsi verrouillée dans le porte-agrafe 1.

Le porte-agrafe 1 est représenté sur les figures 1 à 4 comme un élément destiné à être rapporté au, et fixé sur le, panneau P avant d'y introduire et verrouiller l'agrafe 2. Sur la figure 5, par contre, le porte-agrafe 1 est représenté comme un élément intégré dans le panneau P, par moulage, lors de la fabrication de ce dernier.

Ces deux formes de réalisation sont équivalentes et sont d'ailleurs également applicables au second mode de réalisation de la présente invention.

L'agrafe 2 est par ailleurs conformée de manière à permettre la fixation du panneau P par introduction et encliquetage de l'agrafe 2 dans un logement ou évidement pratiqué dans un élément de carrosserie que le panneau P doit habiller.

A cet effet, l'agrafe 2 comporte un corps d'agrafe 22 assurant le montage de l'agrafe 2 dans le porte-agrafe 1 et une tête 23 élastiquement déformable assurant la fixation, par encliquetage, de l'agrafe 2 dans un élément de carrosserie. Le corps d'agrafe 22 est délimité de la tête d'agrafe 23 par une coupelle semi-rigide 3 dont la face concave est orientée vers la tête 23, car la coupelle 3 est destinée à couvrir, et à rendre ainsi étanche, l'évidement dans lequel la tête 23 s'engage.

La tête 23 comprend deux éléments flexibles 24A, 24B ayant une première extrémité 25 commune et une seconde extrémité, respectivement 26A ou 26B, individuelle à chaque élément flexible et solidaire de la coupelle 3. L'extrémité commune 25 des éléments flexibles 24A, 24B est supportée par deux éléments rigides 27A, également solidaires de la coupelle 3. Les éléments flexibles 24A, 24B s'étendent à partir de l'extrémité commune 25 jusqu'à atteindre un premier diamètre D1, ce diamètre D1 étant le plus grand diamètre de la tête d'agrafe 23. Ensuite, les éléments flexibles 24A, 24B s'étendent sensiblement parallèlement à l'axe longitudinal 21 de l'agrafe 2, sur une première longueur axiale E1 de l'agrafe 2 et puis, après un retrait formant un épaulement 28, avec un second diamètre D2, inférieur au premier diamètre D1, sur une seconde longueur axiale E2 de l'agrafe 2, jusqu'à la coupelle 3.

Les références D1, D2 pour respectivement le premier et le second diamètre de l'agrafe 2, ainsi que les références E1, E2 respectivement pour la première et la seconde longueur axiale des éléments flexibles 24A, 24B ont été rapportées sur la figure 6, qui montre un moyen de fixation de l'invention selon un second mode de réalisation, mais ayant une tête 23 identique à celle du premier mode de réalisation.

Le corps 22 de l'agrafe 2 du moyen de fixation selon le premier mode de réalisation de l'invention comporte un élément cylindrique 4 autour de l'axe longitudinal 21 de l'agrafe 2. L'élément cylindrique 4 a deux extrémités opposées 41, 42, l'extrémité 41 étant solidaire de la coupelle 3 et l'extrémité 42 étant solidaire d'éléments de fixation 51, 52 (ou 181 à 184 selon la figure 6) destinés à la fixation de l'agrafe 2 sur le porte-agrafe 1.

Le corps 22 de l'agrafe 2 comprend par ailleurs, solidaires de l'élément cylindrique 4, des moyens de centrage 61, 62 destinés au centrage de l'agrafe 2 dans l'évidement de l'élément de carrosserie, ainsi que, sur le côté orienté vers la coupelle 3 par rapport aux moyens de centrage 61, 62, des moyens 71, 72, 73 destinés à empêcher un mouvement axial de l'agrafe 2 lors de son centrage dans l'évidement.

Les éléments de fixation 51, 52, destinés à la fixation de l'agrafe 2 sur le porte-agrafe 1 par introduction partielle de l'agrafe 2 dans le porte-agrafe 1 et rotation de l'agrafe 2 autour de son axe longitudinal 21 par rapport au porte-agrafe 1, comprennent un premier verrou à baïonnette 51 et un second verrou à baïonnette 52 axialement espacés l'un de l'autre de manière à pouvoir être placés, et prendre appui, de part et d'autre du panneau P. L'étendue transversale du second verrou 52 est supérieure à celle du premier verrou 51. Grâce à cette disposition, lors de l'introduction de l'agrafe 2 dans le porte-agrafe 1, seul le premier verrou 51 traverse l'évidement 11 qui est formé à cet effet dans le porte-agrafe 1 selon la forme et les dimensions du premier verrou 51. La fixation de l'agrafe 2 sur le porte-agrafe 1 est obtenue, après introduction de l'agrafe 2 dans le porte-agrafe 1, par une rotation de l'agrafe 2 autour de son axe 21 d'un quart de tour.

Il va sans dire que la réalisation des éléments de fixation 51, 52 et leur angle de rotation d'un quart de tour ne sont que des éléments d'une solution préférée selon l'invention. D'autres variantes de réalisation et angles de rotation sont également possibles.

En effet, si des applications particulières pour les moyens de fixation d'un panneau sur un élément de carrosserie devaient l'exiger, il est tout à fait possible, sans sortir du principe de la présente invention, de concevoir les éléments de fixation 51, 52 de manière que l'agrafe 2, après introduction dans le porte-agrafe 1, soit tournée d'une autre fraction de tour que le quart de tour, par exemple d'un tiers de tour.

En effet, selon le mode de réalisation préféré de l'invention, tel que représenté sur les figures 1 à 5, l'élément de fixation 51 comprend deux languettes rigides 511, 512 qui s'étendent dans des directions diamétralement opposées à partir d'une partie centrale 513, avantageusement de forme circulaire. De manière correspondante, l'élément de fixation 52 comprend deux languettes anti-retour 521, 522 qui s'étendent dans des directions diamétralement opposées à partir d'une partie centrale 523. Les dimensions et les formes des éléments de fixation 51 et 52 sont déterminées de manière que l'élément de fixation 51 puisse passer à travers l'évidement 11 du porte-agrafe 1 lors de l'introduction de l'agrafe 2 dans le porte-agrafe 1, mais que l'élément de fixation 52 n'y parvienne pas. A cet effet, comme représenté notamment sur la figure 4, l'élément de fixation 52 a une étendue diamétrale supérieure à celle de l'élément de fixation 51.

De plus, le diamètre de la partie centrale 523 de l'élément de fixation 52, si elle a une forme circulaire, ou sa largeur vue dans une direction transversale par rapport à l'étendue longitudinale des languettes 521, 522 est nettement supérieure au diamètre de la partie centrale 513 de l'élément de fixation 51. Ainsi, l'élément de fixation 52 non seulement n'arrive pas à passer à travers l'évidement 11 du porte-agrafe 1, mais il est également maintenu dans une position stable lorsque l'agrafe 2 a été tournée d'un quart de tour pour verrouiller l'agrafe 2 dans le porte-agrafe 1.

Par ailleurs, le porte-agrafe 1 est pourvu de plots de blocage 53A, 53B formant des rampes d'inclinaisons opposées et disposés par paires de manière que les languettes anti-retour 521, 522 viennent s'arrêter entre une paire de plots 53A, 53B dont les rampes sont montantes d'un plot vers l'autre.

Dans l'exemple du premier mode de réalisation de l'invention, le porte-agrafe 1 est pourvu de deux paires de plots 53A, 53B disposés de manière à bloquer l'agrafe 2 après un quart de tour effectué dans un sens de rotation ou dans l'autre à partir de la direction dans laquelle les languettes 521, 522 se trouvent lors de l'introduction de l'agrafe dans le porte-agrafe 1.

Selon une variante évoquée plus haut, il pourrait s'avérer avantageux, voir nécessaire, de former aussi bien l'élément de fixation 51 que l'élément de fixation 52 avec trois languettes et de pourvoir le porte-agrafe 1 avec trois paires de plots en forme de rampes. L'agrafe 2 sera alors tournée d'un tiers de tour pour la bloquer dans le porte-agrafe 1.

Dans cette variante, les trois languettes anti-retour de l'élément de fixation 52, les trois languettes correspondantes de l'élément de fixation 51 ainsi que les trois évidements dans le porte-agrafe 1 peuvent être disposés de manière régulière, tout comme ils peuvent être disposés de manière irrégulière si l'on cherche à obtenir un effet détrompeur.

Les moyens de centrage 61, 62 destinés à centrer l'agrafe 2 lors de son introduction dans l'évidement de l'élément de carrosserie comprennent deux lamelles flexibles 61 et 62. Ces lamelles 61, 62 sont disposées diamétralement opposées et transversalement par rapport à l'axe longitudinal 21 de l'agrafe 2. Chacune des lamelles flexibles 61 et 62 porte un patin référencé respectivement 63A pour la lamelle 61 et 63B pour la lamelle 62. Les patins 63A, 63B sont destinés à prendre appui sur un rebord 12 formé en saillie sur le porte-agrafe 1 sur la face du porte-agrafe 1 par laquelle l'agrafe 2 est introduite dans l'évidement 11 du porte-agrafe 1.

Les lamelles flexibles 61, 62 sont flexibles non seulement par la matière en laquelle elles sont réalisées, mais surtout par une forme en S, vues dans le sens axial de l'agrafe 2, qui leur permet de manière limitée de raccourcir temporairement leur longueur radiale. Grâce à cette disposition, l'élément cylindrique 4 et la tête 23 de l'agrafe 2 peuvent se déplacer transversalement par rapport à une position nominale, ou position de repos, définie par l'axe 21 de l'agrafe 2 avant l'introduction de l'agrafe 2 dans l'évidement. Ce déplacement transversal peut être effectué dans l'une ou l'autre de deux directions principales définies par le sens de la longueur des lamelles flexibles 61, 62 et un sens transversal par rapport au premier, ainsi que dans toute autre direction résultant d'une addition vectorielle des deux directions principales.

Afin de ne pas entraver ce jeu, l'évidement 11 du porte-agrafe 1 est pourvu d'une partie centrale circulaire dont le diamètre est nettement plus grand que celui de l'élément cylindrique 4.

Le jeu de la tête 23 de l'agrafe 2 suivant le sens de la longueur des lamelles 61, 62 et le jeu de la tête 23 suivant le sens transversal sont de l'ordre de plus ou moins 2,5 mm, c'est-à-dire jusqu'à environ 2,5 mm dans chacune des quatre directions indiquées par ces deux sens.

Contrairement à cela, la tête 23 de l'agrafe 2 n'a aucun jeu dans le sens axial. Ceci est obtenu notamment par un disque 71 disposé parallèlement au plan dans lequel s'étendent les lamelles flexibles 61, 62 des moyens de centrage de l'agrafe 2.

Avantageusement, mais non nécessairement, les moyens empêchant un mouvement axial de l'agrafe 2 comprennent également des languettes de limitation 72, 73 solidaires du disque de limitation 71 et s'étendant à partir du disque 71 radialement vers l'extérieur. Les languettes de limitation s'étendent par ailleurs parallèlement et axialement proches des lamelles flexibles 61, 62.

Les figures 6 à 8 montrent le moyen de fixation de l'invention selon un second mode de réalisation. Ce second mode de réalisation reprend certains éléments et dispositions du moyen de fixation selon le premier mode de réalisation.

En effet, le moyen de fixation selon ce second mode de réalisation comprend un porte-agrafe 101 et une agrafe 102 avec un axe longitudinal 21, l'agrafe 102 et le porte-agrafe 101 étant conformés pour pouvoir être assemblés sur un panneau P et l'agrafe 102 est conformée de manière à permettre la fixation du panneau P par introduction et encliquetage de l'agrafe 102 dans un évidement pratiqué dans un élément de carrosserie.

Dans les dessins, les éléments comparables ou strictement identiques portent les mêmes numéros de référence pour les deux modes de réalisation. Contrairement à cela, les éléments du moyen de fixation ayant la même fonction dans les deux modes de réalisation mais étant agencés ou conformés différemment portent des numéros de référence, dans le second mode de réalisation, augmentés par 100 par rapport aux numéros de référence correspondants du premier mode de réalisation (par exemple agrafe 2 et agrafe 102).

Le moyen de fixation selon le second mode de réalisation diffère du moyen de fixation selon le premier mode de réalisation essentiellement par les éléments permettant de fixer l'agrafe sur le porte-agrafe. En effet, le moyen de fixation selon le second mode de réalisation comprend des éléments d'encliquetage 181 à 184 et non pas des éléments de verrouillage. Les éléments d'encliquetage 181 à 184, dont une partie est utilisée par paires, référencée par la lettre complémentaire OB est destinée à coopérer avec une ouverture 111 pratiquée à cet effet dans le porte-agrafe 101.

Ces éléments de fixation par encliquetage permettant de fixer l'agrafe 102 sur le porte-agrafe 101, comprennent une prolongation 181 axiale de l'élément cylindrique 4, ainsi qu'une traverse 182 formant avec l'élément cylindrique 4 et notamment son élément de prolongation 181, une extrémité en T. Les éléments d'encliquetage comprennent par ailleurs deux griffes 183A, 183B qui s'étendent à partir de la traverse 182, et avec une distance croissante de la partie 181 prolongeant l'élément cylindrique 4, en direction de moyens de centrage 161, 162 correspondant aux moyens de centrage 61, 62 du premier mode de réalisation à l'exception de leur forme courbée.

Selon le mode de réalisation représenté sur les figures 6 à 8, les éléments permettant de fixer l'agrafe 102 sur le porte-agrafe 101 comprennent deux paires de griffes, à savoir une première paire de griffes 183A, 183B disposées aux extrémités de la traverse 182 et une seconde paire 184A, 184B disposées entre la première paire de griffes et l'élément cylindrique 181. Toutefois, il est également concevable, sans sortir du principe de la présente invention, que les éléments permettant de fixer l'agrafe 102 sur le porte-agrafe 101 comprennent une seule paire de griffes, cette paire étant alors disposée aux extrémités de la traverse 182 au milieu de celle-ci, ou alors les éléments de fixation comprennent trois ou davantage de paires de griffes.

Le moyen de fixation selon le second mode de réalisation de l'invention comprend des moyens de centrage 161 à 163 qui comprennent deux lamelles flexibles 161, 162 disposées diamétralement opposées et transversalement par rapport à l'axe longitudinal 121 de l'agrafe 102. Ces lamelles flexibles diffèrent des lamelles flexibles correspondantes 61, 62 du premier mode de réalisation par le fait qu'elles sont entièrement arquées. Les lamelles flexibles sont pourvues par ailleurs, comme les lamelles flexibles 61, 62 du premier mode de réalisation, de patins 163A, 163B. Toutefois, les patins 163A, 163B ne sont pas disposés en T par rapport aux lamelles flexibles 161, 162, mais plutôt en L, et cela en raison de la forme courbée des lamelles par opposition à la terminaison droite des lamelles flexibles 61, 62 du premier mode de réalisation.

Enfin, le moyen de fixation selon le second mode de réalisation comporte, de manière comparable à la disposition du premier mode de réalisation, des moyens 171 empêchant un mouvement axial de l'agrafe 102 lors de son centrage dans un évidement 111 approprié du porte-agrafe 101. Les moyens de centrage 171 du moyen de fixation selon le second mode de réalisation sont formés par un disque 171, ce disque est disposé axialement légèrement espacé des lamelles flexibles 161, 162, vu dans la direction vers les moyens d'encliquetage. Le disque 171 est suffisamment grand pour pouvoir empêcher les lamelles flexibles 161, 162 d'être déformées et pour pouvoir empêcher ainsi l'agrafe 102 de se déplacer axialement.

## Revendications

1. Moyen de fixation pour fixer un panneau (P) tel un panneau d'habillage, sur un élément de carrosserie d'un véhicule automobile, le moyen de fixation comprenant un porte-agrafe (1) et une agrafe (2) avec un axe longitudinal (21), l'agrafe (2) et le porte-agrafe (1) étant conformés pour pouvoir être assemblés sur le panneau (P) et l'agrafe (2) étant également conformée pour permettre la fixation du panneau (P) par introduction et encliquetage de l'agrafe (2) dans un évidement pratiqué dans l'élément de carrosserie, l'agrafe (2) comportant un corps d'agrafe (22) et une tête (23) élastiquement déformable, le corps (22) de l'agrafe (2) comportant un élément cylindrique (4) autour de l'axe longitudinal (21) de l'agrafe (2) avec deux extrémités opposées (41, 42) dont l'une (41) est solidaire de la coupelle (3) supportant la tête (23) de l'agrafe (2) et dont l'autre (42) est solidaire d'éléments de fixation (51, 52) de l'agrafe (2) sur le porte-agrafe (1), le corps (22) de l'agrafe (2) comprenant en outre, solidaires de l'élément (4), des moyens de centrage (61, 62) de l'agrafe (2) dans l'évidement de l'élément de carrosserie et, du côté orienté vers la coupelle (3) des moyens de centrage (61, 62), des moyens (71 - 73) empêchant un mouvement axial de l'agrafe (2) lors de son centrage, **caractérisé en ce que** les moyens permettant le centrage de l'agrafe (2) dans l'évidement de l'élément de carrosserie comprennent deux lamelles flexibles (61, 62) disposées diamétralement opposées et transversalement par rapport à l'axe longitudinal (21) de l'agrafe (2), chacune des lamelles portant un patin (63A, 63B) destiné à prendre appui sur un rebord (12) en saillie sur le porte-agrafe (1).

2. Moyen de fixation selon la revendication 1, **caractérisé en ce que** la tête (23) de l'agrafe (2) a une forme sensiblement conique et est formée par au moins deux éléments flexibles (24A, 24B) ayant chacun une première extrémité (25) en commun avec le (ou les) autre(s) élément(s) flexible(s) et une seconde extrémité (26A, 26B) solidaire d'une coupelle (3) délimitant la tête (23) de l'agrafe (2) du corps (22) de l'agrafe (2), l'extrémité commune (25) des éléments flexibles (24A, 24B) étant supportée par au moins un élément rigide (27A), également solidaire de la coupelle (3), les éléments flexibles (24A, 24B) s'étendant à partir de l'extrémité commune (25) jusqu'à atteindre un premier diamètre (D1) de l'agrafe (2) et ensuite, après un retrait formant un épaulement (28), avec un deuxième diamètre (D2) de l'agrafe (2), inférieur au premier diamètre (D1), jusqu'à la coupelle (3).

3. Moyen de fixation selon la revendication 2, **caractérisé en ce que** les éléments flexibles (24A, 24B) s'étendent à partir de l'extrémité commune (25) jusqu'à atteindre un premier diamètre (D1) de l'agrafe (2) et s'étendent ensuite, sensiblement parallèlement à l'axe longitudinal (21) de l'agrafe (2), sur une première longueur axiale (E1) de l'agrafe (2) et puis, après un retrait formant un épaulement (28), avec un deuxième diamètre (D2) de l'agrafe (2), inférieur au premier diamètre (D1), sur une seconde longueur axiale (E2) de l'agrafe (2) jusqu'à la coupelle (3).

4. Moyen de fixation selon l'une quelconque des revendications 1 à 3, **caractérisé en ce que** les éléments permettant de fixer l'agrafe (2) sur le porte-agrafe (1) comprennent un premier (51) et un second (52) verrous à baïonnette, disposés transversalement par rapport à l'axe longitudinal (21) de l'agrafe (2) et axialement espacés l'un de l'autre de manière à pouvoir recevoir entre eux le panneau (P), l'étendue transversale du second verrou (52), plus proche de la tête (23) de l'agrafe (2) que le premier verrou (51), étant supérieure à celle du premier verrou (51), de manière à ne permettre, lors de l'introduction de l'agrafe (2) dans le porte-agrafe (1), qu'au premier verrou (51) de traverser un évidement (11) formé à cet effet dans le porte-agrafe (1) selon la forme et les dimensions du premier verrou (51), la fixation de l'agrafe (2) sur le porte-agrafe (1) étant obtenue, après introduction de l'agrafe (2) dans le porte-agrafe (1), par une rotation de l'agrafe (2) autour de son axe longitudinal (21) d'une fraction d'un tour.

5. Moyen de fixation selon la revendication 4, **caractérisé en ce qu'**il comprend quatre plots (53A, 53B) en pente destinés à coopérer avec le second verrou à baïonnette (52) pour obtenir une fixation de l'agrafe (2) sur le porte-agrafe (1) par un quart de tour de rotation de l'agrafe (2) par rapport au porte-agrafe (1).

6. Moyen de fixation selon l'une quelconque des revendications 1 à 5, **caractérisé en ce que** les moyens (71, 72, 73) empêchant un mouvement axial de l'agrafe (2) lors de son centrage comportent deux languettes de limitation (72, 73) s'étendant parallèlement aux lamelles flexibles (61, 62) des moyens de centrage.

7. Moyen de fixation selon l'une quelconque des revendications 1 à 5, **caractérisé en ce que** les moyens (71, 72, 73) empêchant un mouvement axial de l'agrafe (2) lors de son centrage comportent un disque de limitation (71).

8. Moyen de fixation selon l'une quelconque des revendications 1 à 3, **caractérisé en ce que** les éléments permettant de fixer l'agrafe (102) sur le porte-agrafe (101) comprennent des éléments d'encliquetage (181 - 184) destinés à coopérer avec une ouverture (111) pratiquée à cet effet dans le porte-agrafe (101).

9. Moyen de fixation selon la revendication 8, **caractérisé en ce que** les éléments permettant de fixer l'agrafe (102) sur le porte-agrafe (101) comprennent une traverse (182) formant avec l'élément cylindrique (4) une extrémité en T, et au moins deux griffes (183A, 183B) s'étendant à partir de la traverse (182), et avec une distance croissante de l'élément cylindrique (4), en direction des moyens de centrage (161, 162).

10. Moyen de fixation selon la revendication 9, **caractérisé en ce que** les éléments de fixation (181 - 184) de l'agrafe (2) sur le porte-agrafe (101) comprennent deux paires de griffes (183A, 183B, 184A, 184B), une première paire (183A, 183B) étant disposée aux extrémités de la traverse (182) et la seconde paire (184A, 184B) étant disposée entre la première paire de griffes (183A, 183B) et l'élément cylindrique (181).

11. Panneau, **caractérisé en ce qu'**il est pourvu de moyens de fixation selon l'une quelconque des revendications 1 à 10.

12. Panneau selon la revendication 11, **caractérisé en ce que** les moyens de fixation comprennent des porte-agrafe (101) intégrés dans le panneau par moulage.

## Claims

1. Fixing means to fix a panel (P), such as a covering panel, on to a body element of a motor vehicle, the fixing means have a clip holder (1) and a clip (2) with a longitudinal axis (21), the clip (2) and the clip holder (1) being made so that they can be fitted on the panel (P) and the clip (2) also being made so that the panel (P) can be fixed by inserting and snapping the clip (2) in a hollow made in the body element, the clip (2) having a clip body (22) and a head (23), which can be deformed flexibly, the body (22) of the clip (2) having a cylindrical element (4) around the longitudinal axis (21) of the clip (2) with two opposite ends (41, 42), one of which (41) is integral with the dish (3) supporting the head (23) of the clip (2), and the other of which (42) is integral with the elements (51, 52) for fixing the clip (2) on the clip holder (1), the body (22) of the clip (2) also having means of centring (61, 62) the clip (2) in the hollow of the body element, which are integral with the element (4), and means of centring (61, 62) and means (71 - 73) of preventing axial movement of the clip (2) when it is being centred on the side turned towards the dish (3), **characterised in that** the means allowing the clip (2) to be centred in the hollow of the body element have two flexible strips (61, 62) arranged diametrically opposite and transversally in relation to the longitudinal axis (21) of the clip (2), each of the strips having a runner (63A, 63B) intended to be supported on a projecting edge (12) on the clip holder (1).

2. Fixing means according to claim 1, **characterised in that** the head (23) of the clip (2) has a more or less conical shape and is formed by at least two flexible elements (24A, 24B), each having a first end (25) in common with the other flexible element(s) and a second end (26A, 26B), which is integral with a dish (3) marking off the head (23) of the clip (2) from the body (22) of the clip (2), the common end (25) of the flexible elements (24A, 24B) being supported by at least one rigid element (27A), which is also integral with the dish (3), the flexible elements (24A, 24B) extending from the common end (25) until they reach a first diameter (D1) of the clip (2) and then, after a recess forming a shoulder (28), with a second diameter (D2) of the clip (2), which is smaller than the first diameter (D1), until they reach the dish (3).

3. Fixing means according to claim 2, **characterised in that** the flexible elements (24A, 24B) extend from the common end (25) until they reach a first diameter (D1) of the clip (2) and then extend more or less parallel to the longitudinal axis (21) of the clip (2) over a first axial length (E1) of the clip (2) and then, after a recess forming a shoulder (28), with a second diameter (D2) of the clip (2), which is smaller than the first diameter (D1), over a second axial length (E2) of the clip (2) until they reach the dish (3).

4. Fixing means according to any one of claims 1 to 3, **characterised in that** the elements allowing the clip (2) to be fixed on the clip holder (1) have a first (51) and a second (52) bayonet catch arranged transversely in relation to the longitudinal axis (21) of the clip (2) and axially at a distance from each other so that they can take the panel (P) between them, the transverse extent of the second catch (52), which is closer to the head (23) of the clip (2) than the first catch (51), being greater than that of the first catch (52), so as to allow only the first catch (51) to cross a hollow (11) formed for this purpose in the clip holder (1) according to the shape and dimensions of the first catch (51), the clip (2) being fixed on the clip holder (1) after the clip (2) is inserted in the clip holder (1) by rotating the clip (2) around its longitudinal axis (21) by a fraction of a turn.

5. Fixing means according to claim 4, **characterised in that** it has four sloping contacts (53A, 53B) intended to work with the second bayonet catch (52) to fix the clip (2) on the clip holder (1) by rotating the clip (2) by a quarter of a turn in relation to the clip holder (1).

6. Fixing means according to any one of claims 1 to 5, **characterised in that** the means (71, 72, 73) preventing axial movement of the clip (2) when it is being centred have two limiting strips (72, 73) extending parallel to the flexible strips (61, 62) of the means of centring.

7. Fixing means according to any one of claims 1 to 5, **characterised in that** the means (71, 72, 73) preventing axial movement of the clip (2) when it is being centred have a limiting disc (71).

8. Fixing means according to any one of claims 1 to 3, **characterised in that** the elements allowing the clip (102) to be fixed on the clip holder (101) have snapping elements (181 - 184) intended to work with an opening (111) made for this purpose in the clip holder (101).

9. Fixing means according to claim 8, **characterised in that** the elements allowing the clip (102) to be fixed on the clip holder (101) have a crosspiece (182) forming a T shaped end with the cylindrical element (4) and at least two grippers (183A, 183B) extending from the crosspiece (182) at an increasing distance from the cylindrical element (4) in the direction of the means of centring (161, 162).

10. Fixing means according to claim 9, **characterised in that** the elements (181 - 184) for fixing the clip (2) on the clip holder (101) have two pairs of grippers (183A, 183B, 184A, 184B), a first pair (183A, 183B) being arranged at the ends of the crosspiece (182) and the second pair (184A, 184B) being arranged between the first pair of grippers (183A, 183B) and the cylindrical element (181).

11. Panel, **characterised in that** it is provided with fixing means according to any one of claims 1 to 10.

12. Panel according to claim 11, **characterised in that** the fixing means have clip holders (101) incorporated into the panel by moulding.

## Patentansprüche

1. Befestigungsmittel zum Befestigen einer Platte (P), wie etwa einer Verkleidungsplatte, an einem Karosserieteil eines Kraftfahrzeugs, wobei das Befestigungsmittel einen Klammerhalter (1) und eine Klammer (2) mit einer Längsachse (21) enthält, wobei die Klammer (2) und der Klammerhalter (1) so gestaltet sind, dass sie an der Platte (P) montierbar sind und die Klammer (2) auch so gestaltet ist, dass sie das Befestigen der Platte (P) durch Einführen und Einschnappen der Klammer (2) in eine Ausnehmung gestattet, die in dem Karosserieteil ausgebildet ist, wobei die Klammer (2) einen Klammerkörper (22) und einen elastisch verformbaren Kopf (23) aufweist, wobei der Körper (22) der Klammer (2) ein Zylinderelement (4) um die Längsachse (21) der Klammer (2) herum mit zwei entgegengesetzten Enden (41, 42) aufweist, von denen das eine (41) fest mit dem Teller (3) verbunden ist, der den Kopf (23) der Klammer (21) abstützt, und das andere (42) fest mit Befestigungselementen (51, 52) zum Befestigen der Klammer (2) am Klammerhalter (1) verbunden ist, wobei der Körper (22) der Klammer (2) ferner mit dem Element (4) fest verbundene Zentriermittel (61, 62) zum Zentrieren der Klammer (23) in der Ausnehmung des Karosserieteils und auf der dem Teller (3) der Zentriermittel (61, 62) zugewandten Seite Mittel (71 - 73) zum Verhindern einer axialen Verstellung der Klammer (2) bei deren Zentrierung aufweist, **dadurch gekennzeichnet, dass** die Mittel, welche das Zentrieren der Klammer (2) in der Ausnehmung des Karosserieteils gestatten, zwei flexible Lamellen (61, 62) enthalten, welche diametral entgegengesetzt sind und quer zur Längsachse (21) der Klammer (2) verlaufen, wobei jede Lamelle einen Schuh (63A, 63B) trägt, der dazu bestimmt ist, sich an einer Umrandung (12) abzustützen, die von dem Klammerhalter (1) vorspringt.

2. Befestigungsmittel nach Anspruch 1, **dadurch gekennzeichnet, dass** der Kopf (23) der Klammer (2) eine im wesentlichen konische Form hat und von zumindest zwei biegsamen Teilen (24A, 24B) gebildet wird, die jeweils ein erstes Ende (25) gemeinsam mit dem bzw. den weiteren biegsamen Teilen und ein zweites Ende (26A, 26B) haben, das fest mit einem Teller (3) verbunden ist, der den Kopf (23) der Klammer (2) vom Körper (22) der Klammer (2) abgrenzt, wobei das gemeinsame Ende (25) der biegsamen Teile (24A, 24B) von zumindest einem starren Teil (27A) abgestützt wird, das auch fest mit dem Teller (3) verbunden ist, wobei die biegsamen Teile (24A, 24B) sich ausgehend von dem gemeinsamen Ende (25) erstrecken, bis sie einen ersten Durchmesser (D1) der Klammer (2) erreichen, und sich dann nach einem eine Schulter (28) bildenden Rücksprung mit einem zweiten Durchmesser (D2) der Klammer (2), der kleiner ist als der erste Durchmesser (D1), bis zum Teller (3) erstrecken.

3. Befestigungsmittel nach Anspruch 2, **dadurch gekennzeichnet, dass** die biegsamen Teile (24A, 24B) sich ausgehend von dem gemeinsamen Ende (25) erstrecken, bis sie einen ersten Durchmesser (D1) der Klammer (2) erreichen, und sich danach im wesentlichen parallel zur Längsachse (21) der Klammer (2) über eine erste axiale Länge (E1) der Klammer (2) und dann nach einem eine Schulter (28) bildenden Rücksprung mit einem zweiten Durchmesser (D2) der Klammer (2), der kleiner ist als der erste Durchmesser (D1), über eine zweite axiale Länge (E2) der Klammer bis zum Teller (3) erstrecken.

4. Befestigungsmittel nach einem der Ansprüche 1 bis 3, **dadurch gekennzeichnet, dass** die das Befestigen der Klammer (2) am Klammerhalter (1) gestattenden Teile einen ersten Bajonettverschluss (51) und einen zweiten Bajonettverschluss (52) aufweisen, die quer zur Längsachse (21) der Klammer (2) angeordnet und axial voneinander so beabstandet sind, dass sie zwischen sich die Platte (P) aufnehmen können, wobei die Quererstreckung des zweiten Verschlusses (52), der dem Kopf (23) der Klammer (2) näher liegt als der erste Verschluss (51), größer ist als die des ersten Verschlusses (51), so dass es beim Einführen der Klammer (2) in den Klammerhalter (1) nur dem ersten Verschluss (51) möglich ist, eine Ausnehmung (11) zu durchsetzen, die zu diesem Zweck in dem Klammerhalter (1) entsprechend der Form und den Abmessungen des ersten Verschlusses (51) ausgebildet ist, wobei die Befestigung der Klammer (2) am Klammerhalter (1) nach Einführen der Klammer (2) in den Klammerhalter (1) durch Verdrehen der Klammer (2) um eine Teilumdrehung um ihre Längsachse (21) herum erhalten wird.

5. Befestigungsmittel nach Anspruch 4, **dadurch gekennzeichnet, dass** es vier Zapfen (53A, 53B) enthält, die geneigt verlaufen und dazu bestimmt sind, mit dem zweiten Bajonettverschluss (52) zusammenzuwirken, um eine Befestigung der Klammer (2) an dem Klammerhalter (1) über eine Viertelumdrehung der Klammer (2) bezüglich des Klammerhalters (1) zu erhalten.

6. Befestigungsmittel nach einem der Ansprüche 1 bis 5, **dadurch gekennzeichnet, dass** die Mittel (71, 72, 73), welche eine axiale Verstellung der Klammer (2) bei deren Zentrierung verhindern, zwei Begrenzungszungen (72, 73) enthalten, die sich parallel zu den biegsamen Lamellen (61, 62) der Zentriermittel erstrecken.

7. Befestigungsmittel nach einem der Ansprüche 1 bis 5, **dadurch gekennzeichnet, dass** die Mittel (71, 72, 73), welche eine axiale Verstellung der Klammer (2) bei deren Zentrierung verhindern, eine Begrenzungsscheibe (71) enthalten.

8. Befestigungsmittel nach einem der Ansprüche 1 bis 3, **dadurch gekennzeichnet, dass** die Mittel zum Befestigen der Klammer (102) an den Klammerhalter (101) Einschnappelemente (181 - 184) enthalten, die dazu bestimmt sind, mit einer Öffnung (111) zusammenzuwirken, die dazu in dem Klammerhalter (101) ausgeführt ist.

9. Befestigungsmittel nach Anspruch 8, **dadurch gekennzeichnet, dass** die Mittel zum Befestigen der Klammer (102) an den Klammerhalter (101) einen Quersteg (182) enthalten, der mit dem Zylinderelement (4) ein T-förmiges Ende bildet, sowie zumindest zwei Klauen (183A, 183B), die sich ausgehend von dem Quersteg (182) mit einem sich erweiternden Abstand vom Zylinderelement (4) in Richtung der Zentriermittel (161, 162) erstrecken.

10. Befestigungsmittel nach Anspruch 9, **dadurch gekennzeichnet, dass** die Befestigungselemente (181 - 184) zum Befestigen der Klammer (2) an den Klammerhalter (101) zwei Klauenpaare (183A, 183B, 184A, 184B) enthalten, wobei ein erstes Paar (183A, 183B) an den Enden des Querstegs (182) und das zweite Paar (184A, 184B) zwischen dem ersten Klauenpaar (183A, 183B) und dem Zylinderelement (181) angeordnet ist.

11. Platte, **dadurch gekennzeichnet, dass** sie mit Befestigungsmitteln nach einem der Ansprüche 1 bis 10 versehen ist.

12. Platte nach Anspruch 11, **dadurch gekennzeichnet, dass** die Befestigungsmittel Klammerhalter (101) enthalten, die durch Formung in die Platte eingeformt sind.
